# EUROPEAN PATENT APPLICATION

(11) **EP 4 692 005 A1**
(43) Date of publication of application: **11.02.2026**
(21) Application number: 24780703.5
(22) Date of filing: 28.03.2024
(51) Int. Cl.: C03B 20/00, C04B 41/87, C23C 4/129

(54) **METHOD FOR PRODUCING QUARTZ MEMBER, DEVICE FOR COATING QUARTZ MEMBER, AND METHOD FOR REGENERATING QUARTZ MEMBER**

(30) Priority: 31.03.2023 JP 2023058455
(71) Applicant: MITSUBISHI CHEMICAL CORPORATION, Tokyo 100-8251 (JP)
(72) Inventor: MUNEHIRA, Masami, Tokyo 100-8251 (JP); XIE, Guoyan, Tokyo 100-8251 (JP)
(74) Representative: Vossius & Partner Patentanwälte Rechtsanwälte mbB
(86) International application number: PCT/JP2024/012799
(87) International publication number: WO 2024/204604

(57) **Abstract**

Provided are a method for producing a quartz member, a quartz member coating device, and a method for regenerating a quartz member, which are capable of suppressing disturbance of a flame emitted from a burner when quartz coating is performed on a base material. Provided is a method for producing a quartz member, the method including a fire processing step of applying heat with a burner to a surface of a processing target member containing quartz, wherein, in the fire processing step, an airflow control plate is installed within a range of ± 45° with respect to a position parallel to an axis of the burner as a reference.

## Description

### Technical Field

The present invention relates to a method for producing a quartz member including a fire processing step, a quartz member coating device, and a method for regenerating a quartz member.

### Background Art

Machines, devices, containers, and the like used in semiconductor production steps are required to have chemical purity as well as heat resistance depending on the step in which they are used.

It is necessary to suppress reactions with semiconductor materials and transition of elements under all circumstances, and quartz glass is known as almost the only material that satisfies all of these conditions.

A quartz glass member used in the semiconductor industry is produced as a commercial product by processing a natural quartz glass material into a desired shape by fire processing or the like, applying stress relief annealing or the like to the processed material, and then cleaning the annealed material.

The fire processing also includes coating. Conceivable needs for coating quartz glass onto a surface of a base material are, for example, suppression of generation of impurities from a base material constituting a device, regeneration of a quartz member having a reduced thickness, and an increase in the purity of a member close to a silicon wafer.

As a method for coating quartz glass onto a surface of a base material, Patent Literature 1 describes a method of cladding and coating a quartz member using a quartz-made oxyhydrogen burner. In the method of Patent Literature 1, quartz powder is mixed into an oxygen gas by the so-called Bernoulli method. The powder is deposited on the base material by using gravity, and thus a coating target portion is limited to an upward surface of the base material.

Patent Literature 2 describes a method for forming a quartz glass sprayed film on a side surface of a base material by using a plasma spraying method. **In** this plasma spraying, heated and molten particles are sprayed onto the base material at a high speed, and thus the particles are solidified in a flat shape after collision. Therefore, this method is not suitable for the purpose of obtaining a dense coating film without bubbles, and is actually used for applications utilizing the presence of bubbles generated in the film.

When coating is performed for the purpose of regenerating a quartz member having a reduced thickness, it is necessary that the coating can be performed at any angle in accordance with the shape of the member. In the thermal spray coating of quartz glass, a coating target base material and quartz powder as a coating raw material are heated using an oxyhydrogen flame, and thus heated air generates an upward airflow.

The state of the upward airflow greatly varies depending on the surrounding environment, but the upward airflow has a significant influence when the inner surface, not the outer surface, of the coating target quartz member is coated. Specifically, the upward airflow interferes with the oxyhydrogen flame and causes the flame to flicker irregularly, heat input to the quartz member and the raw material quartz powder is not constant, and an unmolten residue is generated. Further, the raw material quartz powder is supplied while passing through the center of the oxyhydrogen flame and being heated, but due to turbulence of the flame, the raw material quartz powder is attached to a place shifted from the target place by an order of several millimeters, and a portion that cannot receive heat necessary for melting after the attachment is generated. These significantly inhibit realization of a uniform coating.

### Citation List

### Patent Literature

Patent Literature 1: JP 7-126025 A
Patent Literature 2: JP 2004-142996 A

### Summary of Invention

### Technical Problem

An object of the present invention is to provide a method for producing a quartz member, a quartz member coating device, and a method for regenerating a quartz member, which are capable of suppressing disturbance of a flame emitted from a burner when quartz coating is performed on a base material.

### Solution to Problem

As a result of intensive studies to solve the above problems based on understanding of the phenomenology by thermal flow analysis, the present inventor has found that the above problems can be solved by installing an airflow control plate for suppressing inflow of an upward airflow (thermal airflow) into a flame below a burner for generating an oxyhydrogen flame, and have arrived at the present invention. Specifically, the present invention is as follows.

[1] A method for producing a quartz member, the method including a fire processing step of applying heat with a burner to a surface of a processing target member containing quartz, wherein, in the fire processing step, an airflow control plate is installed within a range of ± 45° with respect to a position parallel to an axis of the burner as a reference.
[2] The method for producing a quartz member according to [1], wherein the fire processing step includes a treatment of spraying a silica powder onto the surface of the processing target member while melting the silica powder to perform coating.
[3] The method for producing a quartz member according to **[1]** or [2], wherein a shape of the airflow control plate is line-symmetric with respect to the axis of the burner as a reference.
[4] The method for producing a quartz member according to any of [1] to [3], wherein an interval between a surface of the airflow control plate facing the burner and the axis of the burner is 20 mm or more and 500 mm or less.
[5] The method for producing a quartz member according to any of [1] to [4], wherein an angle formed between an axial direction of the burner and a vertical direction is 30° or more and 150° or less.
[6] The method for producing a quartz member according to any of [1] to [5], wherein the airflow control plate is installed at a position in a gravity direction of the burner.
[7] The method for producing a quartz member according to any of [1] to [6], wherein the airflow control plate is installed within a range of ± 20° with respect to the position parallel to the axis of the burner as a reference.
[8] The method for producing a quartz member according to any of [1] to [7], wherein the burner has a plurality of supply pipes for supplying a gas or a powder.
[9] The method for producing a quartz member according to any of [1] to [8], wherein the burner has supply pipes for a silica powder, an oxygen gas, and a hydrogen gas.
[10] The method for producing a quartz member according to any of [2] to [9], wherein a gas having an oxygen volume content of 80% or less is used as a carrier gas for the silica powder.
[11] The method for producing a quartz member according to any of [1] to [10], wherein a processing surface of the processing target member is a curved surface.
[12] A quartz member coating device including a burner and an airflow control plate, wherein the airflow control plate is installed within a range of ± 45° with respect to a position parallel to an axis of the burner as a reference.
[13] The quartz member coating device according to [12], wherein an interval between a surface of the airflow control plate facing the burner and the axis of the burner is 20 mm or more and 500 mm or less.
[14] The quartz member coating device according to [12] or [13], wherein the airflow control plate is installed at a position in a gravity direction of the burner.
[15] The quartz member coating device according to any of [12] to [14], wherein an angle formed between an axial direction of the burner and a vertical direction is 30° or more and 150° or less.
[16] The quartz member coating device according to any of [12] to [15], wherein the airflow control plate is installed within a range of ± 20° with respect to a position parallel to a spraying direction of a flame as a reference.
[17] A method for regenerating a quartz member, the method including providing a quartz coating film on a quartz member using the quartz member coating device described in any of [12] to [16].

### Advantageous Effects of Invention

According to the present invention, it is possible to suppress inflow of an upward airflow (thermal airflow) into a burner flame, to stabilize the burner flame, and to form a transparent and dense coating film.

### Brief Description of Drawings

FIG. 1 is a configuration diagram of a burner according to an embodiment. FIG. 1(a) is a front view, and FIG. 1(b) is a cross-sectional view taken along line B-B of FIG. 1(a).
FIG. 2 is a configuration diagram of a hopper.
FIG. 3 is a diagram illustrating an example of installation of an airflow control plate.
FIG. 4 is a plan view of the airflow control plate and the burner.

### Description of Embodiments

Embodiments of the present invention will be described in detail below, but the present invention is not limited to the following embodiments and can be carried out with various modifications within the scope of the gist of the invention.

### Method for Producing Quartz Member

First, the method for producing a quartz member of the present invention will be described.

The method for producing a quartz member of the present invention is characterized by including a fire processing step of applying heat with a burner to a surface of a processing target member containing quartz, wherein, in the fire processing step, an airflow control plate is installed within a range of ± 45° with respect to a position parallel to an axis of the burner as a reference.

### Burner (Quartz Burner, hereinafter may be referred to simply as "Burner")

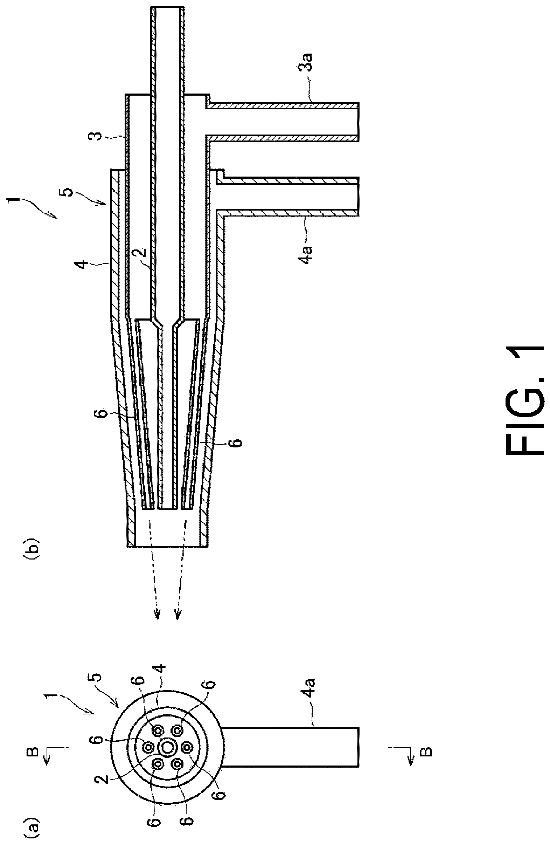

FIG. 1 illustrates a burner 1 according to an embodiment. FIG. 1(a) is a front view, and FIG. 1(b) is a cross-sectional view taken along line B-B of FIG. 1(a).

The burner 1 has a multiple structure having a plurality of supply pipes for supplying a gas or a powder. That is, the burner 1 is a so-called quartz burner for processing quartz glass, and, as illustrated in FIG. 1, has a barrel 5 having a multi-pipe structure composed of three or more pipes, i.e., a supply pipe 2 for raw material silica powder, a supply pipe 3 for oxygen gas, and a supply pipe 4 for hydrogen gas, in this order from the center in a radial direction. Rear end sides of the supply pipe 3 for oxygen gas and the supply pipe 4 for hydrogen gas are closed by closing members (not illustrated). The supply pipe 3 for oxygen gas and the supply pipe 4 for hydrogen gas are provided with a gas inlet 3a and a gas inlet 4a, respectively.

A tapered portion which becomes thinner toward a front end is provided from the barrel 5 to a front end portion.

The tapered portion has a structure in which oxygen gas nozzles 6 are disposed at circumferentially equal intervals on concentric circles, and a portion of the hydrogen gas is introduced into gaps between the oxygen gas nozzles 6. A front end side in the supply pipe 3 for oxygen gas communicates only with the inside of the oxygen gas nozzle 6. Although six oxygen gas nozzles 6 are illustrated, the number of the oxygen gas nozzles 6 is not limited to six.

A convergent point of blowout flows of the raw material silica powder, the oxygen gas, and the hydrogen gas is formed in front of the burner 1. An axial direction of each of the oxygen gas nozzles 6 is directed to the convergent point.

The raw material silica powder blown out together with the carrier gas from the central supply pipe 2 for silica powder undergoes a guide action from a combustion flame of surrounding oxygen and hydrogen gases, and efficiently gathers near the convergent point while receiving an amount of heat required for melting, and is molten and sprayed onto the surface of a target member to form a quartz coating.

### Raw Material Silica Powder

The raw material silica powder is preferably highly pure (e.g., higher than 5N), because the resulting film is also highly pure. However, a powder having a purity of 5N or lower, such as a natural quartz powder, may be used depending on the application.

The particle size of the raw material silica powder is usually from 20 µm to 400 µm, preferably from 40 µm to 200 µm, and more preferably from 50 µm to 80 µm. In the present invention, the particle size of the silica powder is evaluated by sieving.

When the particle size of the raw material silica powder is 20 µm or more, the silica powder is less likely to be vaporized at the time of blowing out from the nozzle, and is less likely to be turned into fumed silica, resulting in an increase in film formation yield. When the particle size of the raw material silica powder is 400 µm or less, the silica powder easily undergoes a guide action from an oxyhydrogen combustion flame, and the film is formed on the target surface without variation.

### Target Member for Forming Quartz Member

The target member on which a quartz member is formed, more specifically, a coating is formed by melting the silica powder in the fire processing step, is preferably a quartz member, and examples thereof include an etching ring in a plasma etching device, a quartz plate, a square cleaning tank, and a furnace core tube used in a semiconductor wafer oxide film forming device. The processing surface of the processing target member may have any shape, but the present production method and device are particularly effective when the processing surface is a curved surface. When the processing surface is a curved surface, the burner flame is more likely to be affected by the upward airflow as compared to the case where the processing surface is a flat surface. Even in such a situation, the method for producing a quartz member of the present embodiment can sufficiently suppress the influence of the upward airflow.

The target member desirably has a linear expansion close to that of the raw material silica powder in order to prevent occurrence of stress due to a difference in linear expansion after film formation. Specifically, the coating surface preferably has an average linear expansion coefficient of from 0.5 × 10⁻⁶ to 0.6 × 10⁻⁶ [K⁻¹]. In the case where a primary layer having a linear expansion close to the average linear expansion is formed on the surface to be coated of the target member, the material of the target member itself may be other than quartz.

### Silica Powder Feed Device

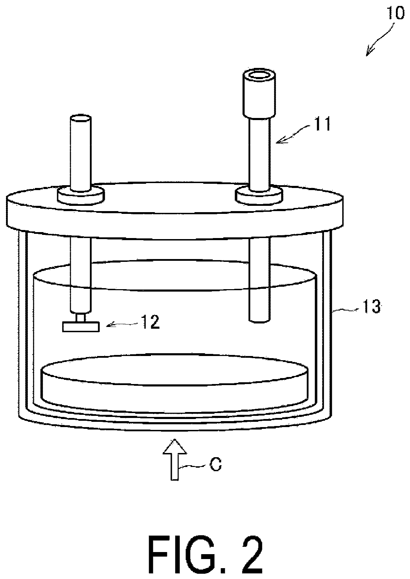

As illustrated in FIG. 2, a silica powder feed device 10 uses a quartz tube for a suction line 11 of a hopper for the raw material silica powder. The raw material silica powder is sucked out to the suction line 11 together with the carrier gas by a negative pressure generated by the ejection of the oxygen gas and the hydrogen gas in the burner 1. A member (scraper 12) for smoothing the surface of the silica powder in the hopper 13 is a quartz member.

The carrier gas is introduced into the hopper 13 from the vicinity of the center of the bottom of the hopper 13 as indicated by an arrow C. The carrier gas to be used is nitrogen gas, oxygen, air, or the like. The carrier gas to be used is preferably a gas having an oxygen volume content of 80% or less. When the oxygen content is 80% or less, it is possible to suppress the raw material powder to be thermally sprayed from being turned into fumes after being ejected from the nozzle tip.

### Airflow Control Plate

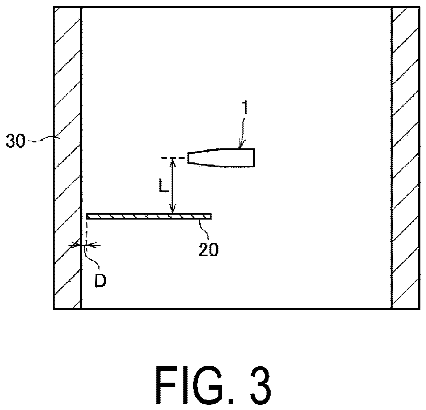

As illustrated in FIG. 3, the airflow control plate 20 is a member that is installed below the flame emitted from the burner 1 when the target member 30 is coated, and suppresses an upward airflow generated by heated air from flowing into the flame.

The material of the airflow control plate 20 is preferably quartz glass, but may be a metal as long as the target member 30 is not affected. The airflow control plate 20 has a thickness of, for example, from 3 mm to 10 mm. The upward airflow is particularly likely to be generated during processing in a closed space, such as during coating of an inner circumferential surface of a tubular target member.

The airflow control plate 20 is installed within a range of ± 45° with respect to a position parallel to the axis of the burner as a reference. Within this range, the interference of the upward airflow with the burner flame can be sufficiently suppressed. When the angle is smaller than -45° and larger than +45°, the interference of the upward airflow with the burner flame cannot be sufficiently suppressed.

The airflow control plate 20 is more preferably installed within a range of ± 20° with respect to the position parallel to the axis of the burner as a reference. Within this range, the interference of the upward airflow with the burner flame can be more sufficiently suppressed. When the angle is smaller than -20° and larger than +20°, the interference of the upward airflow with the burner flame cannot be sufficiently suppressed.

More preferably, the airflow control plate 20 is installed parallel to the burner axis, which is a spraying direction of the burner flame. When the airflow control plate 20 is installed parallel to the burner axis, the interval between the entire burner flame and the airflow control plate 20 is constant, flickering of the flame is suppressed, and the flame can be stabilized, as compared to the case where the airflow control plate 20 is installed non-parallel to the burner axis.

The burner is preferably disposed such that the angle formed between an axial direction of the burner and a vertical direction is 30° or more and 150° or less. **In** the case where the airflow control plate 20 is installed within a range of ± 45° with respect to the position parallel to the axis of the burner as a reference, when the burner is disposed such that the angle formed between the axial direction of the burner and the vertical direction is 30° or more and 150° or less, the interference of the upward airflow with the burner flame can be more reliably suppressed.

The airflow control plate 20 is preferably installed at a position in a gravity direction of the burner. When the airflow control plate 20 is disposed at this position, it is possible to more sufficiently suppress the interference of the upward airflow with the burner flame.

The airflow control plate 20 is preferably disposed in a region where a distance L from the center of the burner flame to the surface facing the burner flame is 20 mm or more and 500 mm or less, and more preferably 30 mm or more and 100 mm or less. When the interval between the airflow control plate 20 and the burner flame is 20 mm or more, the airflow control plate 20 can be prevented from being thermally deformed by radiant heat during long-time coating. When the interval between the airflow control plate 20 and the burner flame is 500 mm or less, the upward airflow can be effectively prevented from flowing into the flame.

An interval D between an end edge of the airflow control plate 20 in the spraying direction of the burner flame and the coating surface of the target member 30 (e.g., the inner circumferential surface of the target member 30) is preferably 5 mm or more and 20 mm or less, and the airflow control plate 20 is installed so that, for example, the interval D is 10 mm. This can prevent the upward airflow from a gap between the airflow control plate 20 and the coating surface of the target member 30 from interfering with the burner flame.

When the burner 1 is moved, the airflow control plate 20 is moved following the movement of the burner 1. For example, the airflow control plate 20 may be mounted integrally with the quartz burner.

The shape of the airflow control plate 20 is not particularly limited, but is preferably a shape such that an end of the airflow control plate 20 in the spraying direction of the burner flame is along the coating surface of the target member 30. This can prevent the upward airflow from a gap between the airflow control plate 20 and the coating surface of the target member 30 from interfering with the burner flame.

The airflow control plate 20 is preferably line-symmetric with respect to a projection line obtained by projecting the burner flame onto the airflow control plate 20. That is, the shape of the airflow control plate 20 is preferably line-symmetric with respect to the axis of the burner 1 as a reference. Thus, the upward airflow is divided by the airflow control plate 20 with good symmetry, and the flickering of the burner flame can be suppressed.

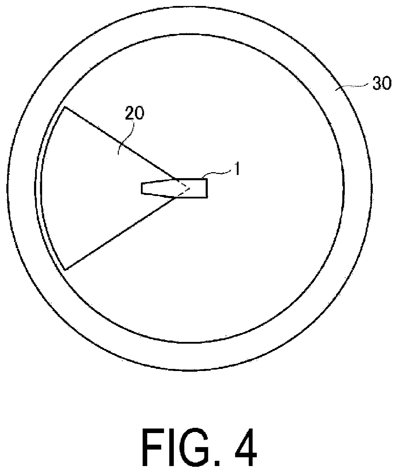

For example, when an inner circumferential surface of a cylindrical target member 30 is coated using a burner 1 disposed at the center as illustrated in FIG. 4, it is preferable to use a fan-shaped airflow control plate 20. A projection line obtained by projecting the burner flame onto the airflow control plate 20 bisects a central angle of the fan shape. The central angle of the fan shape is preferably 30° or more and 225° or less, and more preferably 45° or more and 90° or less. When the central angle is set to 30° or more, the interference of the upward airflow with the burner flame can be suppressed. When the central angle is set to 225° or less, the cost of the airflow control plate 20 can be suppressed. When the central angle is 180°, the shape is semicircular.

### Steps of Method for Producing Quartz Member

**In** the case of producing a quartz member, i.e., in order to coat the quartz member on the target member 30, the front end of the burner 1 is disposed toward the target member 30, and the distance from the front end of the burner 1 to the target member 30 is adjusted. An airflow control plate is disposed between the front end of the burner 1 and the target member 30 and in a region below the burner 1. **In** a state where the raw material silica powder is not supplied, the burner 1 is ignited, and the distance between the burner 1 and the target member 30 is adjusted so that the surface of the target member 30 reaches 1800°C or higher and becomes incandescent. When the distance is adjusted in this manner, a transparent and dense coating film is easily formed. The angle of the airflow control plate is adjusted so that the airflow control plate is parallel to the burner flame.

Thereafter, while the ignition state of the burner 1 is maintained, supply of the raw material silica powder is started. In a state where the distance between the burner 1 and the target member 30 is kept constant, coating on the surface of the target member 30 is performed while the burner 1 is moved or the target member 30 is moved. The coating is not necessarily formed on the entire surface of the target member, and only a portion of the target member may be coated.

The movement of the burner includes moving the front end of the burner in the horizontal direction or the vertical direction to change the spraying direction of the flame. For example, the spraying direction of the burner flame is from 30° to 150° from the vertical direction (in a range of from +60° to -60° with respect to the horizontal direction as a reference), preferably from 45° to 135°, and more preferably from 70° to 100°. When the spraying direction of the burner flame is moved, a desired range can be coated.

The raw material silica powder does not need to be supplied at all times. After a predetermined coating thickness is achieved, a flattening treatment of the coating surface by heating only with the oxyhydrogen flame may be performed.

### Quartz Member Coating Device

The quartz member coating device of the present invention is characterized by including a burner and an airflow control plate, wherein the airflow control plate is installed within a range of ± 45° with respect to a position parallel to an axis of the burner as a reference.

The burner 1 and the airflow control plate 20 used in the method for producing a quartz member described above can be used as the burner and the airflow control plate included in the quartz member coating device of the present invention.

A preferred position of the airflow control plate 20 with respect to the burner 1 may be the same as the preferred position described above for the method for producing a quartz member.

In addition, the quartz member coating device of the present invention can be provided with the aforementioned silica powder feed device and other equipment that supports coating according to the required characteristics.

Further, the target member to be preferably coated using the quartz member coating device of the present invention and the feature that the coating surface is a curved surface are also the same as in the above-described method for producing a quartz member.

The quartz member coating device of the present invention can be used to provide a transparent and dense coating film on a quartz member.

### Method for Regenerating Quartz Member

The method for regenerating a quartz member of the present invention is characterized by providing a quartz coating film on a quartz member using the quartz coating device described above.

According to the method for regenerating a quartz member of the present invention, a transparent and dense coating film can be provided on a quartz member, whereby the quartz member can be regenerated.

### Examples

### Example 1

A cylindrical quartz jig having a thickness of 7 mm and an inner diameter of 500 mm was used as a target member. The quartz jig was fixed in a vertically standing manner, and a burner 1 was disposed horizontally inside the quartz jig. The distance between the inner circumferential surface of the quartz jig and the front end of the burner was set to 160 mm.

An airflow control plate 20 composed of a fan-shaped quartz plate having a thickness of 5 mm, a radius of 240 mm, and a central angle of 60° was installed 50 mm below the front end of the burner with good symmetry so that the airflow control plate 20 was horizontal to the axis of the burner, and the interval between the end edge of the fan shape (arc portion) and the inner circumferential surface of the quartz jig was 10 mm.

Silica powder (metal impurity content: 0.1 ppm or less) having an average particle size (D50) of 80 µm was supplied at a carrier gas flow rate of 2 L/min and in an amount of 1.2 g/min, and the silica powder was melt-coated onto the quartz jig using an oxyhydrogen flame under the conditions of a hydrogen gas flow rate of 90 L/min and an oxygen gas flow rate of 25 L/min. Nitrogen was used as the carrier gas.

The coating was performed by thermal spraying while the quartz jig was rotated at an angular velocity of the inner circumferential surface of 2 mm/sec. During the coating, the burner flame was stabilized, and a quartz member (melt-coating film) having a width of 5 mm and a uniform thickness was formed on the inner circumferential surface of the quartz jig.

### Comparative Example 1

Formation of a quartz member (melt-coating) was performed on the inner circumferential surface of the quartz jig in the same manner as in Example 1 except that the airflow control plate was not disposed.

During the formation of the quartz member (during the coating), the burner flame was occasionally disturbed in the vertical direction, and irregular sound which was considered to be derived from airflow was confirmed. Although a coating film having a width of 5 mm was formed on the inner circumferential surface of the quartz jig, the attachment of the silica powder and an unmolten residue thereof were observed at a position of about from 2.5 mm to 5 mm distant from the coating center.

### Reference Signs List

1 Burner
2 Supply pipe for silica powder
3 Supply pipe for oxygen gas
4 Supply pipe for hydrogen gas
5 Barrel
6 Oxygen gas nozzle
10 Silica powder feed device
11 Suction line
12 Scraper
13 Hopper
20 Airflow control plate
30 Target member

## Claims

1. A method for producing a quartz member, the method comprising a fire processing step of applying heat with a burner to a surface of a processing target member containing quartz, wherein, in the fire processing step, an airflow control plate is installed within a range of ± 45° with respect to a position parallel to an axis of the burner as a reference.

2. The method for producing a quartz member according to claim 1, wherein the fire processing step includes a treatment of spraying a silica powder onto the surface of the processing target member while melting the silica powder to perform coating.

3. The method for producing a quartz member according to claim 1 or 2, wherein a shape of the airflow control plate is line-symmetric with respect to the axis of the burner as a reference.

4. The method for producing a quartz member according to claim 1 or 2, wherein an interval between a surface of the airflow control plate corresponding to the burner and the axis of the burner is 20 mm or more and 500 mm or less.

5. The method for producing a quartz member according to claim 1 or 2, wherein an angle formed between an axial direction of the burner and a vertical direction is 30° or more and 150° or less.

6. The method for producing a quartz member according to claim 1 or 2, wherein the airflow control plate is installed at a position in a gravity direction of the burner.

7. The method for producing a quartz member according to claim 1 or 2, wherein the airflow control plate is installed within a range of ± 20° with respect to the position parallel to the axis of the burner as a reference.

8. The method for producing a quartz member according to claim 1 or 2, wherein the burner has a plurality of supply pipes for supplying a gas or a powder.

9. The method for producing a quartz member according to claim 1 or 2, wherein the burner has supply pipes for a silica powder, an oxygen gas, and a hydrogen gas.

10. The method for producing a quartz member according to claim 2, wherein a gas having an oxygen volume content of 80% or less is used as a carrier gas for the silica powder.

11. The method for producing a quartz member according to claim 1 or 2, wherein a processing surface of the processing target member is a curved surface.

12. A quartz member coating device comprising a burner and an airflow control plate, wherein the airflow control plate is installed within a range of ± 45° with respect to a position parallel to an axis of the burner as a reference.

13. The quartz member coating device according to claim 12, wherein an interval between the airflow control plate and the axis of the burner is 20 mm or more and 500 mm or less.

14. The quartz member coating device according to claim 12, wherein the airflow control plate is installed at a position in a gravity direction of the burner.

15. The quartz member coating device according to claim 12, wherein an angle formed between an axial direction of the burner and a vertical direction is 30° or more and 150° or less.

16. The quartz member coating device according to claim 12, wherein the airflow control plate is installed within a range of ± 20° with respect to a position parallel to a spraying direction of a flame as a reference.

17. A method for regenerating a quartz member, the method comprising providing a quartz coating film on a quartz member using the quartz member coating device described in any of claims 12 to 16.
